# EUROPEAN PATENT APPLICATION

(11) **EP 3 734 114 A1**
(43) Date of publication of application: **04.11.2020**
(21) Application number: 19771621.0
(22) Date of filing: 22.02.2019
(51) Int. Cl.: F16H 25/24, B64C 13/40, F16F 9/20, F16F 9/32, F16F 9/46, F16F 15/023, F16H 25/20, F16H 25/22, H02K 7/06, B64C 9/00

(54) **ACTUATOR AND AIRCRAFT CONTROL SURFACE DRIVE SYSTEM**

(30) Priority: 23.03.2018 JP 2018056383
(71) Applicant: MITSUBISHI HEAVY INDUSTRIES, LTD., Chiyoda-ku Tokyo 100-8332 (JP)
(72) Inventor: MORISAKI, Yuki, Tokyo 100-8332 (JP); KOMATSU, Naotaka, Tokyo 100-8332 (JP); SAIKI, Yasuhiro, Tokyo 100-8332 (JP); OYAMA, Kenichi, Tokyo 100-8332 (JP)
(74) Representative: Henkel & Partner mbB
(86) International application number: PCT/JP2019/006834
(87) International publication number: WO 2019/181365

(57) **Abstract**

The purpose of the present invention is to suppress an increase in pressure of internally contained lubricating oil and to reduce leakage of the lubricating oil. This actuator (1) is provided with: an accumulator (4) which has a gas compartment (5) at the top filled with gas, and in which a lubricating oil is contained under the gas compartment (5); a housing (2) internally provided with the accumulator (4); a shaft (3) of which one end side is contained in the housing (2) and another end side is disposed outside the housing (2), and which is moveable in an axial direction; and an oil seal (15) disposed between a first opening portion (12) which is formed in the accumulator (4) and through which the shaft (3) penetrates the shaft (3). The housing (2) has formed therein a pipe channel (6) providing communication between a space (23) on the side opposite to the inner side of the accumulator (4) with respect to the oil seal (15) and the gas compartment (5) of the accumulator (4).

## Description

### Technical Field

The present invention relates to an actuator and an aircraft control surface drive system.

### Background Art

A hydraulic actuator or an electric actuator is used to drive a control surface (flight control surface) of an aircraft. For the electric actuator, an electric motor is used as a drive source but the electric motor is lower than a hydraulic pump in output density, the hydraulic pump being a drive source of the hydraulic actuator. Therefore, for the electric actuator, a motion conversion mechanism including a speed reduction mechanism, a ball screw, and the like is needed.

In the case of the motion conversion mechanism including the speed reduction mechanism, the ball screw, and the like in the electric actuator, jamming may occur at a sliding surface. When the jamming occurs, the actuator cannot perform a desired operation. Particularly, in the case of the electric actuator used to drive an aircraft control surface, the frequency of reciprocation in a narrow range is high. Therefore, there is a high possibility that lubricant or grease flows out and becomes insufficient on the sliding surface of the ball screw and thus the jamming occurs. In addition, in a case where the viscosity of grease is increased to prevent the outflow, it becomes difficult to form a grease layer on the sliding surface uniformly, and local lubrication insufficiency becomes like to occur.

PTLs 1 to 3 disclose techniques in which lubricant is sealed in a casing (housing) in an actuator including a ball screw such that a sliding motion between a screw shaft and a nut of the ball screw becomes smooth.

### Citation List

### Patent Literature

[PTL 1] Japanese Unexamined Patent Application Publication No. 2000-161461
[PTL 2] PCT Japanese Translation Patent Publication No. 2007-531489
[PTL 3] Japanese Unexamined Patent Application Publication No. 2016-54618

### Summary of Invention

### Technical Problem

In a case where lubricant is accommodated in the housing of the actuator, an oil seal is installed in a gap of an opening, in which a shaft (shaft portion) or a screw shaft is provided to penetrate through the opening, in the housing such that the lubricant does not leak from an inside. Meanwhile, in the actuator including the ball screw, the hydraulic pressure of the lubricant sealed in the housing is locally increased when the shaft of the actuator or the nut of the ball screw moves in the housing. Therefore, even in a case where the oil seal is installed, if the hydraulic pressure becomes higher than the outside of the oil seal, it may not be possible to prevent the lubricant from leaking from the inside of the housing.

The present invention has been made in view of such circumstances and an object thereof is to provide an actuator with which it is possible to suppress an increase in pressure of internally accommodated lubricant and to reduce leakage of the lubricant.

### Solution to Problem

An actuator of the present invention adopts the following means in order to solve the above problems.

That is, according to a first aspect of the present invention, there is provided an actuator including an accumulator that includes a gas compartment at a top filled with gas and in which lubricant is accommodated below the gas compartment, a housing in which the accumulator is provided, a shaft portion of which one end side is accommodated in the housing and the other end side is installed outside the housing, the shaft portion being moveable in an axial direction, and a first seal portion that is installed between the shaft portion and a first opening which is formed in the accumulator and through which the shaft portion penetrates, in which a first pipe channel through which a space that is on a side opposite to an inner side of the accumulator with respect to the first seal portion and the gas compartment of the accumulator communicate with each other is formed inside the housing.

According to the configuration, the accumulator is provided in the housing and includes the gas compartment at the top filled with gas and the lubricant is accommodated below the gas compartment. Since the one end side of the shaft portion is accommodated in the housing and the other end side thereof is installed outside the housing, the other end of the shaft portion linearly reciprocates outside the housing. In the accumulator, the first opening in which the shaft portion is installed to penetrate through the first opening is formed and the first seal portion is installed between the first opening and the shaft portion.

Inside the housing, the first pipe channel is formed on a side opposite to the inner side of the accumulator with respect to the first seal portion and the first pipe channel communicates with the gas compartment of the accumulator. Accordingly, the pressure in the gas compartment of the accumulator, the pressure of the lubricant accommodated in the accumulator, and the pressure in the first pipe channel become equal to each other and thus the pressure of the lubricant is prevented from increasing due to the movement of the shaft portion. As a result, even in a case where the shaft portion is moved, leakage of the lubricant from a gap between the first seal portion and the shaft portion can be reduced or prevented.

The actuator according to the first aspect may further include an electric motor that is provided in the housing, a ball screw that includes a screw shaft of which one end side is connected to the electric motor and the other end side is connected to the shaft portion and a nut that moves along the screw shaft, the screw shaft being rotated by a drive force of the electric motor, and a second seal portion that is installed between the screw shaft and a second opening which is formed in the accumulator and through which the screw shaft penetrates, and a second pipe channel through which a space that is on a side opposite to the inner side of the accumulator with respect to the second seal portion and the gas compartment of the accumulator communicate with each other may be formed inside the housing.

According to a second aspect of the present invention, there is provided an actuator including an accumulator that includes a gas compartment at a top filled with gas and in which lubricant is accommodated below the gas compartment, a housing in which the accumulator is provided, an electric motor that is provided in the housing, a ball screw that includes a screw shaft of which one end side is connected to the electric motor and a nut that moves along the screw shaft, the screw shaft being rotated by a drive force of the electric motor, and a second seal portion that is installed between the screw shaft and a second opening which is formed in the accumulator and through which the screw shaft penetrates, in which a second pipe channel through which a space that is on a side opposite to an inner side of the accumulator with respect to the second seal portion and the gas compartment of the accumulator communicate with each other is formed inside the housing.

According to the configuration, the accumulator is provided in the housing and includes the gas compartment at the top filled with gas and the lubricant is accommodated below the gas compartment. The ball screw includes the screw shaft and the nut, the screw shaft is rotated by the drive force of the electric motor and the nut moves along the screw shaft. In the accumulator, the second opening in which the screw shaft is installed to penetrate through the second opening is formed and the second seal portion is installed between the second opening and the screw shaft.

Inside the housing, the second pipe channel is formed on a side opposite to the inner side of the accumulator with respect to the second seal portion and the second pipe channel communicates with the gas compartment of the accumulator. Accordingly, the pressure in the gas compartment of the accumulator, the pressure of the lubricant accommodated in the accumulator, and the pressure in the second pipe channel become equal to each other and thus the pressure of the lubricant is prevented from increasing due to the movement of the nut of the ball screw. As a result, even in a case where the nut of the ball screw is moved, leakage of the lubricant from a gap between the second seal portion and the screw shaft can be reduced or prevented.

In the first and second aspects, the accumulator and/or the shaft portion may be formed such that a damping performance is exhibited with the lubricant moving with respect to an external force applied to the shaft portion.

According to the configuration, for example, the lubricant passes through a communication hole inside the accumulator due to a structure of the accumulator and/or the shaft portion and as a result, in the actuator, resistance is generated with the lubricant moving with respect to the external force applied to the shaft portion and thus the damping performance is exhibited. In a case where the screw shaft of the ball screw is connected to the shaft portion, it is desirable that a rotary shaft of the electric motor and the screw shaft of the ball screw are able to rotate with respect to the external force applied to the shaft portion.

According to a third aspect of the present invention, there is provided an aircraft control surface drive system including a set of two actuators described above and in which, when one of the actuators is driven, the other of the actuators is not driven.

According to the configuration, a so-called active-standby system can be adopted with the set of two actuators and thus only one actuator out of the set of actuators can be driven (active) with the other actuator being not driven (standby) when a control surface of an aircraft is to be operated. At this time, for example, in the actuator on a standby-side, the lubricant in the accumulator moves while flowing through the communication hole when a shaft and the ball screw are moved. As a result, the actuator on the standby-side has a damper function and exhibits a damping performance.

### Advantageous Effects of Invention

It is possible to suppress an increase in pressure of internally accommodated lubricant and to reduce leakage of the lubricant.

### Brief Description of Drawings

Fig. 1 is a longitudinal sectional view showing an actuator according to a first embodiment of the present invention.
Fig. 2 is a longitudinal sectional view showing the actuator according to the first embodiment of the present invention and shows a state where an outwardly protruding shaft is contracted more than a state shown in Fig. 1.
Fig. 3 is a longitudinal sectional view showing a control surface drive system according to a second embodiment of the present invention.

### Description of Embodiments

### [First Embodiment]

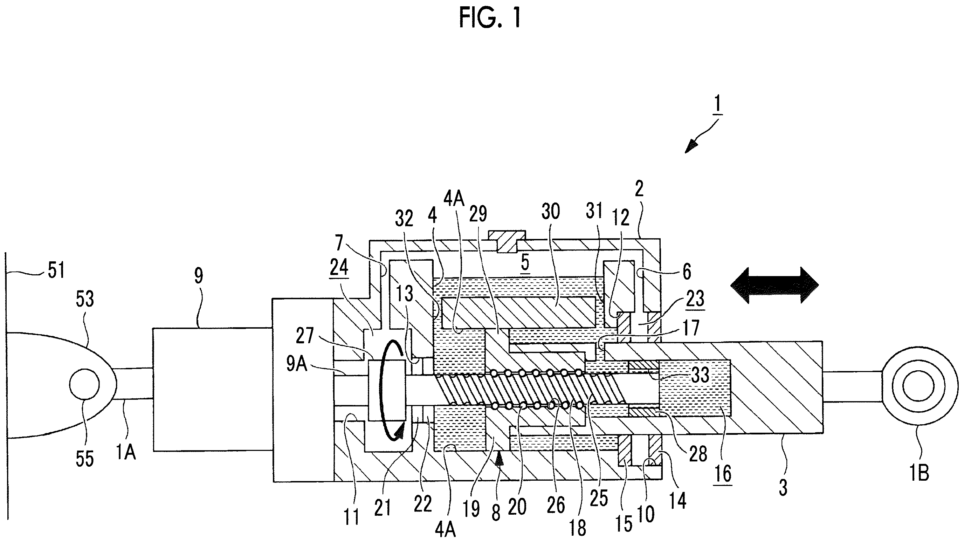

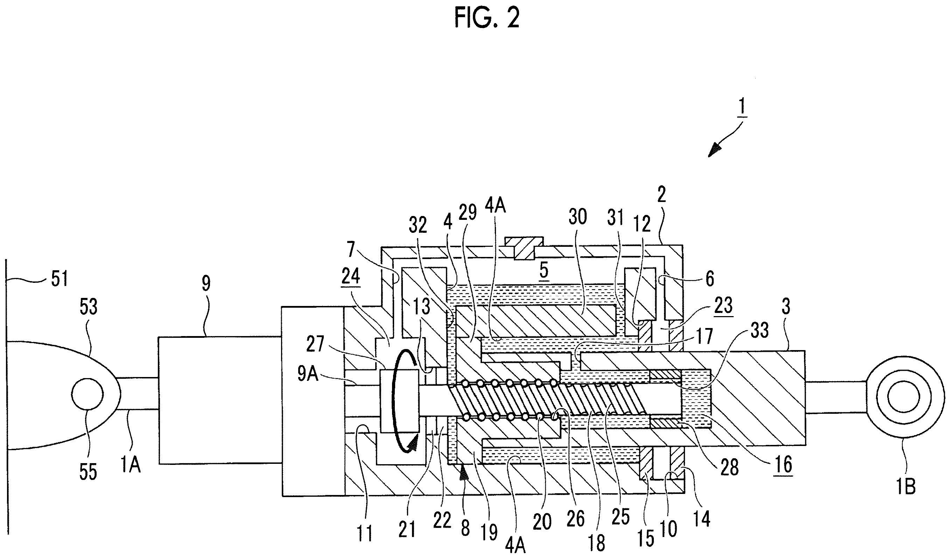

Hereinafter, an actuator 1 according to a first embodiment of the present invention will be described with reference to Figs. 1 and 2.

The actuator 1 is used to drive a control surface (flight control surface) of an aircraft, for example. In this case, one end of the actuator 1 is provided on a body (main wing or like) 51 side of the aircraft and the other end thereof is provided on the control surface side of the aircraft. The control surface is caused to perform a predetermined operation of moving upward or downward by the actuator 1. Another member capable of transmitting a force is installed between the actuator 1 and the body 51 or between the actuator 1 and the control surface.

The actuator 1 includes a housing 2, a shaft (shaft portion) 3 that enters and exits the housing 2, an accumulator 4 that is accommodated in the housing 2, pipe channels 6 and 7 that are formed in the housing 2 and communicate with a gas compartment 5 of the accumulator 4, a ball screw 8, and an electric motor 9.

The housing 2 has a tubular shape that is long in one direction along an axial direction of the shaft 3 and one end side of the shaft 3 is accommodated therein. In the housing 2, the accumulator 4, the pipe channels 6 and 7, and the ball screw 8 are installed in addition to the shaft 3. An opening 10 is formed on one end portion side of the housing 2 and an opening 11 is formed on the other end portion side.

The shaft 3 is a shaft-shaped member and is installed to penetrate through the opening 10 formed in one end portion of the housing 2 and an opening 12 formed on one end portion side of the accumulator 4. Oil seals 14 and 15 are installed between the opening 10 and the shaft 3 and between the opening 12 and the shaft 3 respectively and the oil seals 14 and 15 prevent lubricant from leaking to the outside from the inside.

Inside the shaft 3, an internal space 16 in which a screw shaft 18 of the ball screw 8 is accommodated is formed along the axial direction. In addition, a communication hole 17, through which the outside of the shaft 3 in the accumulator 4 and the internal space 16 of the shaft 3 communicate with each other, is formed in the shaft 3 so that the lubricant can flow between the accumulator 4 and the internal space 16.

The accumulator 4 is provided in the housing 2 and the lubricant can be accommodated in the accumulator 4. At the time of use of the actuator 1, the lubricant is accommodated in the accumulator 4 and the shaft 3 and the ball screw 8 are installed inside the accommodated lubricant.

A sliding surface between an outer peripheral surface of a support block 29 provided on a nut 19 of the ball screw 8 and an inner peripheral surface 4A of the accumulator 4 of the housing 2 and a sliding surface between an outer peripheral surface of a support block 28 provided on the screw shaft 18 of the ball screw 8 and an inner peripheral surface of the shaft 3 are lubricated with the lubricant. In addition, a sliding surface between spiral grooves 25 and 26 of the ball screw 8 and balls 20 is lubricated with the lubricant.

At the top of the accumulator 4, the gas compartment 5 that is open to the inside of the housing 2 and is filled with a gas above the lubricant accommodated in the accumulator 4 is formed. The inside of the housing 2 is sealed and is maintained at a predetermined pressure (for example, value higher than atmospheric pressure) or more. Note that, the housing 2 may be made open without being sealed such that the pressure in the housing 2 becomes the atmospheric pressure as long as leakage of the lubricant through the oil seals 15 and 21 can be prevented.

One end side of the shaft 3 is accommodated in the accumulator 4. In the accumulator 4, the ball screw 8 is installed in addition to the shaft 3. The opening 12 is formed on one end portion side of the accumulator 4 and an opening 13 is formed on the other end portion side.

In the accumulator 4, a partition wall 30 is provided above the shaft 3 and the ball screw 8 and below the liquid surface of the lubricant. The accumulator 4 is formed with the inner peripheral surface 4A parallel to the axial direction of the shaft 3 and the partition wall 30 is also formed with the inner peripheral surface 4A parallel to the axial direction of the shaft 3.

Communication holes 31 and 32 are formed on a front end portion side and a rear end portion side of the partition wall 30, respectively. Here, the front end portion side is an end portion side at which the shaft 3 enters and exits the housing 2 and the rear end portion side is an end portion side opposite to the end portion side at which the shaft 3 enters and exits the housing 2.

The communication holes 31 and 32 connect a space on the gas compartment 5 side and a space on the shaft 3 side or the ball screw 8 side. The lubricant accommodated in the accumulator 4 can flow between both of the spaces through the communication holes 31 and 32. The communication hole 31 communicates with a space closer to the front end portion side than the support block 29 and the communication hole 32 communicates with a space closer to the rear end portion side than the support block 29.

The pipe channel 6 is formed in the housing 2, one end thereof is connected to a space 23 on a side opposite to an inner side of the accumulator 4 with respect to the oil seal 15, and the other end thereof is connected to the gas compartment 5 of the accumulator 4. The space 23 on the side opposite to the inner side of the accumulator 4 with respect to the oil seal 15 and the gas compartment 5 of the accumulator 4 communicate with each other through the pipe channel 6 and gas can flow between both spaces.

The pipe channel 7 is formed in the housing 2, one end thereof is connected to a space 24 on a side opposite to the inner side of the accumulator 4 with respect to the oil seal 21, and the other end thereof is connected to the gas compartment 5 of the accumulator 4. The space 24 on the side opposite to the inner side of the accumulator 4 with respect to the oil seal 21 and the gas compartment 5 of the accumulator 4 communicate with each other through the pipe channel 6 and gas can flow between both spaces.

Accordingly, the three spaces, which are the gas compartment 5 of the accumulator 4, the space 23 on the side opposite to the inner side of the accumulator 4 with respect to the oil seal 15, and space 24 on the side opposite to the inner side of the accumulator 4 with respect to the oil seal 21, communicate with each other. Therefore, the pressure of gas in the gas compartment 5, the pressure of the lubricant in the accumulator 4, and the pressure of gas in the spaces 23 and 24 that are disposed outward of the oil seals 15 and 21 with respect to the accumulator 4 are kept equal to each other.

The ball screw 8 includes the screw shaft 18, the nut 19, the balls 20, and the like.

The screw shaft 18 is a shaft-shaped member and is installed to penetrate through the opening 13 formed on the other end portion side of the accumulator 4. The oil seal 21 is installed between the opening 13 and the screw shaft 18 and the oil seal 21 prevents lubricant from leaking to the outside from the inside. In addition, a rolling bearing 22 is installed between the opening 13 and the screw shaft 18 and the rolling bearing 22 supports the screw shaft 18 such that the screw shaft 18 can rotate around an axis.

The spiral groove 25 is spirally formed on an outer peripheral surface of the screw shaft 18 and the spiral groove 26 is spirally formed on an inner peripheral surface of the nut 19. The spiral groove 25 of the screw shaft 18 and the spiral groove 26 of the nut 19 correspond to each other and a plurality of the balls 20 are disposed between the spiral grooves 25 and 26 such that the balls 20 can roll.

One end side of the screw shaft 18 is connected to the electric motor 9 via a coupling 27 and is rotated by a drive force of the electric motor 9. The position of the screw shaft 18 in the housing 2 is fixed.

The nut 19 moves in the axial direction of the screw shaft 18 when the screw shaft 18 rotates in a state where the nut 19 is restrained from rotating. The nut 19 is integrally coupled to the shaft 3 and the shaft 3 moves when the nut 19 moves.

The electric motor 9 is, for example, a servo motor and outputs a rotational motion such that the movement of the shaft 3 is adjusted in accordance with the position of the shaft 3. The electric motor 9 is operated based on a drive signal from a control unit that controls the driving of the actuator 1. Angle detection of a rotary shaft 9A of the electric motor 9 is performed by means of a resolver, an encoder, a tacho generator, or the like. The electric motor 9 is controlled by feedback control such that the shaft 3 reaches a target drive amount.

The electric motor 9 is installed outside the housing 2 and is connected to the screw shaft 18 of the ball screw 8 via the rotary shaft 9A and the coupling 27. The rotary shaft 9A is provided, for example, to penetrate through the opening 11 of the housing 2.

The support block 28 is installed at a tip end of the screw shaft 18. The support block 28 is, for example, a tubular member and the outer peripheral surface of the support block 28 slidably comes into contact with the inner peripheral surface of the internal space 16 of the shaft 3. Accordingly, the shaft 3 is supported at both of an inner side and an outer side and the screw shaft 18 is supported at a tip end thereof. Therefore, inclination of the shaft 3 or the screw shaft 18 can be suppressed.

The support block 29 is installed on an end portion of the nut 19 that is on the electric motor 9 side. The support block 29 is, for example, a plate-shaped member and the outer peripheral surface of the support block 29 slidably comes into contact with the inner peripheral surface 4A of the accumulator 4. Accordingly, the nut 19 and the shaft 3 connected to the nut 19 are supported with respect to the housing 2 on the electric motor 9 side and thus inclination of the shaft 3 or the screw shaft 18 can be suppressed.

In the support block 28, a communication hole 33 is formed. The communication hole 33 connects a space in the internal space 16 that is on the front end portion side and a space in the internal space 16 that is on the rear end portion side to each other. The lubricant accommodated in the internal space 16 can flow between both of the spaces through the communication hole 33.

In a case where the shaft 3 is to be moved to the front end portion side or the rear end portion side, the electric motor 9 is driven in accordance with the target drive amount of the actuator 1 while the feedback control is being performed, so that the movement of the shaft 3 is adjusted. In addition, when the target drive amount is reached, the electric motor 9 stops the movement of the shaft 3.

When the shaft 3 moves to the front end portion side, a space in the accumulator 4 that is closer to the front end portion side than the support block 29 becomes narrower while a space that is closer to the rear end portion side than the support block 29 becomes wider. In addition, a space in the internal space 16 of the shaft 3 that is closer to the front end portion side than the support block 28 becomes wider while a space that is closer to the rear end portion side than the support block 28 becomes narrower. As a result, in the accumulator 4, the lubricant flows upward through the communication hole 31 from the space that is closer to the front end portion side than the support block 29 and flows into the space that is closer to the rear end portion side than the support block 29 from above through the communication hole 32. In addition, in the internal space 16 of the shaft 3, the lubricant in the space that is closer to the rear end portion side than the support block 28 flows into a space on the front end portion side through the communication hole 33.

On the contrary, when the shaft 3 moves to the rear end portion side, the space in the accumulator 4 that is closer to the rear end portion side than the support block 29 becomes narrower while the space that is closer to the front end portion side than the support block 29 becomes wider. In addition, the space in the internal space 16 of the shaft 3 that is closer to the rear end portion side than the support block 28 becomes wider while the space that is closer to the front end portion side than the support block 28 becomes narrower. As a result, in the accumulator 4, the lubricant flows upward through the communication hole 32 from the space that is closer to the rear end portion side than the support block 29 and flows into the space that is closer to the front end portion side than the support block 29 from above through the communication hole 31. In addition, in the internal space 16 of the shaft 3, the lubricant in the space that is closer to the front end portion side than the support block 28 flows into a space on the rear end portion side through the communication hole 33.

In a case where the electric motor 9 is not driven and a force is input via end portions 1A and 1B of the actuator 1 from the outside, the shaft 3 and the ball screw 8 are moved by an external force and the rotary shaft 9A of the electric motor 9 is moved following the movement of the ball screw 8. Then, in a case where the shaft 3 and the ball screw 8 are moved, the lubricant in the accumulator 4 passes through the communication holes 31, 32, and 33 and resistance is generated. As a result, in a case where the electric motor 9 is not driven, the actuator 1 has a damper function and exhibits a damping performance.

Next, the operation of the actuator 1 configured as described above will be described.

When a drive signal for driving the actuator 1 is input to the actuator 1, the electric motor 9 is driven. Then, the screw shaft 18 of the ball screw 8 is rotated due to a rotational force from the electric motor 9 and the nut 19 moves along the axial direction of the screw shaft 18 due to the movement of the balls 20. As a result, the shaft 3 moves linearly with respect to the housing 2.

In addition, the electric motor 9 is driven in accordance with the target drive amount of the actuator 1 while the feedback control is being performed, so that the movement of the shaft 3 is adjusted. In addition, when the target drive amount is reached, the electric motor 9 stops the movement of the shaft 3.

According to the present embodiment above, the lubricant is accommodated in the accumulator 4 and the shaft 3 and the ball screw 8 are installed inside the accommodated lubricant. Accordingly, the lubricant is supplied to the sliding surface between the outer peripheral surface of the support block 29 provided on the nut 19 of the ball screw 8 and the inner peripheral surface 4A of the accumulator 4 and the sliding surface between the outer peripheral surface of the support block 28 provided on the screw shaft 18 of the ball screw 8 and the inner peripheral surface of the shaft 3 at all times. In addition, the lubricant is supplied to the sliding surface between the spiral grooves 25 and 26 of the ball screw 8 and the balls 20 at all times. Therefore, in the actuator 1 according to the present embodiment, the possibility of jamming occurring at a sliding surface can be reduced.

In addition, the three spaces, which are the gas compartment 5 of the accumulator 4, the space 23 on the side opposite to the inner side of the accumulator 4 with respect to the oil seal 15, and space 24 on the side opposite to the inner side of the accumulator 4 with respect to the oil seal 21, communicate with each other. Therefore, the pressure of the gas in the gas compartment 5, the pressure of the lubricant in the accumulator 4, and the pressure of the gas in the spaces that are disposed outward of the oil seals 15 and 21 with respect to the accumulator 4 are kept equal to each other. Therefore, the pressure of the lubricant is prevented from increasing due to the movement of the shaft 3 or the ball screw 8. As a result, even in a case where the shaft 3 or the ball screw 8 is moved, leakage of the lubricant from a gap between the oil seal 15 and the shaft 3 or a gap between the oil seal 21 and the screw shaft 18 can be reduced or prevented.

### [Second Embodiment]

Next, an aircraft control surface drive system 50 in which the actuator 1 according to a second embodiment of the present invention is used will be described with reference to Figs. 1 to 3.

The aircraft control surface drive system 50 includes the actuator 1 that is installed between the body 51 and a control surface 52. As the actuator 1, the actuator 1 according to the first embodiment shown in Figs. 1 and 2 is applied.

One end portion 1A of the actuator 1 is connected to the body 51 via a connection member 53 and the other end portion 1B is connected to the control surface 52 via a connection member 54, for example. At each of the connection members 53 and 54, each member is bonded via a pin 55 to be rotatable around an axis of the pin 55. Note that, a configuration relating to connection of the actuator 1 in the aircraft control surface drive system 50 is not limited to an example described above.

According to the aircraft control surface drive system 50, it is possible to perform a predetermined operation of the control surface 52 such as a predetermined operation of moving the control surface 52 upward or downward with the actuator 1 being driven.

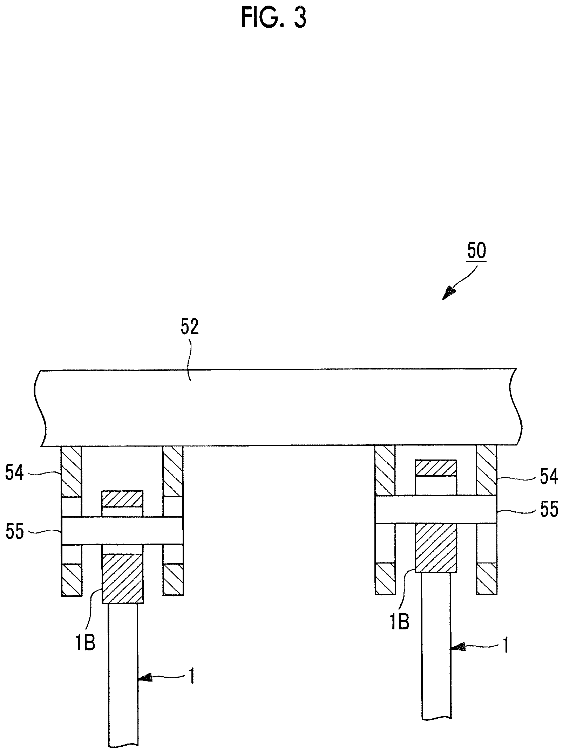

The aircraft control surface drive system 50 according to the present embodiment may include a set of two actuators 1 and 1 as shown in Fig. 3. According to the set of the actuators 1 and 1, a so-called active-standby system can be adopted. That is, when the control surface 52 is to be operated, only one actuator 1 out of the set of actuators 1 and 1 is driven (active) and the other actuator 1 is not driven (standby).

Regarding the actuator 1 on an active-side (right side in example shown in Fig. 3), since the electric motor 9 is driven, the position of the shaft 3 is not changed corresponding to vibration even if vibration or the like is transmitted from the end portions 1A and 1B of the actuator 1. Meanwhile, regarding the actuator 1 on a standby-side (left side in example shown in Fig. 3), since no electric motor 9 is driven, the position of the shaft 3 is in a state of being able to be changed corresponding to vibration if vibration or the like is transmitted from the body 51 or the control surface 52 via the end portions 1A and 1B of the actuator 1. That is, the rotary shaft 9A of the electric motor 9 and the screw shaft 18 of the ball screw 8 are rotated with respect to an external force applied to the shaft 3.

Then, in a case where the shaft 3 and the ball screw 8 are moved, the lubricant in the accumulator 4 moves through the communication holes 31, 32, and 33. As a result, the actuator 1 on the standby-side has a damper function and exhibits a damping performance.

Therefore, since the active-standby system is adopted, occurrence of resonance at the control surface 52 can be suppressed in comparison with a case where the control surface 52 is operated only by the actuator 1 on the active side.

### Reference Signs List

- 1:: actuator
- 1A, 1B:: end portion
- 2:: housing
- 3:: shaft
- 4:: accumulator
- 4A:: inner peripheral surface
- 5:: gas compartment
- 6:: pipe channel
- 7:: pipe channel
- 8:: ball screw
- 9:: electric motor
- 9A:: rotary shaft
- 10, 11, 12, 13:: opening
- 14, 15:: oil seal
- 16:: internal space
- 17:: communication hole
- 18:: screw shaft
- 19:: nut
- 20:: ball
- 21:: oil seal
- 22:: rolling bearing
- 23, 24:: space
- 25, 26:: spiral groove
- 27:: coupling
- 28, 29:: support block
- 30:: partition wall
- 31, 32, 33:: communication hole
- 50:: aircraft control surface drive system
- 51:: body
- 52:: control surface
- 53, 54:: connection member
- 55:: pin

## Claims

1. An actuator comprising:
an accumulator that includes a gas compartment at a top filled with gas and in which lubricant is accommodated below the gas compartment;
a housing in which the accumulator is provided;
a shaft portion of which one end side is accommodated in the housing and the other end side is installed outside the housing, the shaft portion being moveable in an axial direction; and
a first seal portion that is installed between the shaft portion and a first opening which is formed in the accumulator and through which the shaft portion penetrates,
wherein a first pipe channel through which a space t hat is on a side opposite to an inner side of the accumula tor with respect to the first seal portion and the gas com partment of the accumulator communicate with each other is formed inside the housing.

2. The actuator according to Claim 1, further comprising:
an electric motor that is provided in the housing;
a ball screw that includes a screw shaft of which one end side is connected to the electric motor and the other end side is connected to the shaft portion and a nut that moves along the screw shaft, the screw shaft being rotated by a drive force of the electric motor; and
a second seal portion that is installed between the screw shaft and a second opening which is formed in the accumulator and through which the screw shaft penetrates,
wherein a second pipe channel through which a space that is on a side opposite to the inner side of the accumu lator with respect to the second seal portion and the gas compartment of the accumulator communicate with each other is formed inside the housing.

3. An actuator comprising:
an accumulator that includes a gas compartment at a top filled with gas and in which lubricant is accommodated below the gas compartment;
a housing in which the accumulator is provided;
an electric motor that is provided in the housing;
a ball screw that includes a screw shaft of which one end side is connected to the electric motor and a nut that moves along the screw shaft, the screw shaft being rotated by a drive force of the electric motor; and
a second seal portion that is installed between the screw shaft and a second opening which is formed in the accumulator and through which the screw shaft penetrates,
wherein a second pipe channel through which a space that is on a side opposite to an inner side of the accumul ator with respect to the second seal portion and the gas c ompartment of the accumulator communicate with each other is formed inside the housing.

4. The actuator according to Claim 1 or 2,
wherein the accumulator and/or the shaft portion is formed such that a damping performance is exhibited with t he lubricant moving with respect to an external force appl ied to the shaft portion.

5. An aircraft control surface drive system comprising:
a set of two actuators according to Claim 3,
wherein, when one of the actuators is driven, the other of the actuators is not driven.
